# EUROPEAN PATENT APPLICATION

(11) **EP 1 621 296 A1**
(43) Date of publication of application: **01.02.2006**
(21) Application number: 05016425.0
(22) Date of filing: 28.07.2005
(51) Int. Cl.: B25J 9/00, B25J 5/02, B25J 9/16

(54) **Transfer robot system comprising a manipulator and a temporary container depository moving synchronously with the manipulator**

(30) Priority: 29.07.2004 JP 2004221640
(71) Applicant: FANUC LTD, Minamitsuru-gun, Yamanashi 401-0597 (JP)
(72) Inventor: Hariki, Kazuo, Minamitsuru-gun Yamanashi 401-0511 (JP); Oda, Masaru FANUC Manshonharimomi, Minamitsuru-gun Yamanashi 401-0511 (JP)
(74) Representative: Schmidt, Steffen J.

(57) **Abstract**

A transfer robot system with a manipulator (18). The transfer robot system includes a track (16) extending between a first position (12) at which a container (60) containing a workpiece (64) is placed and a second position (14) to which the workpiece in the container is fed; a manipulator (12) movable along the track and capable of holding the container and the workpiece; a temporary container-depository (20) movable along the track synchronously with the manipulator, the container taken out from the first position by the manipulator being temporarily put thereon; a workpiece detecting section (22) for detecting the position and the orientation of the workpiece, contained in the container put on the temporary container-depository, during a period when the manipulator and the temporary container-depository move along the track synchronously with each other; and a transfer control section (24) for controlling the manipulator, based on a detection result in the workpiece detecting section, to make the manipulator pick out the workpiece from the container put on the temporary container-depository and feed the workpiece picked from the container to the second position.

## Description

### BACKGROUND OF THE INVENTION

### 1. Field of the Invention

The present invention relates to a transfer robot system.

### 2. Description of the Related Art

In recent years, a workpiece transfer system, provided in a factory or the like, in which a designated workpiece contained in a certain container placed at a container storing area (in this application, referred to as a "container station") is picked out from the container and is transferred to a desired working area (in this application, referred to as a "working station") for a machining process, a welding process, etc., has been directed to an unmanned system due to the introduction of a manipulator referred generally to as a handling robot. In a workpiece transfer system using such a manipulator (in this application, referred to as a "transfer robot system"), it is known that the manipulator selects a designated container from among a plurality of containers stored at a first position, such as a container station, and takes out it from the first position, and thereafter the manipulator temporarily puts the designated container on a temporary container-depository fixedly provided at the vicinity of the first position (see, e.g., Japanese Unexamined Patent Publication (Kokai) No. 2004-196548 (JP-A-2004-196548)).

In the above configuration, a workpiece detection device including a visual sensor detects the position and orientation of one or more workpieces contained in the container that is temporarily placed in a stationary state at the fixed temporary container-depository. Based on the detection result, the manipulator smoothly picks out a desired workpiece from the container placed at the temporary container-depository, and feeds it to a second position such as a working station. In the transfer robot system described in JP-A-2004-196548, two robots are used in such a manner that a first robot operates to take out the container from the first position and locate it at a predetermined temporary container-depository (a predetermined spatial position within the working space of the robots) to immovably hold it, and that a second robot operates to detect, by a visual sensor, and pick out a workpiece in the container statically held by the first robot. As the workpiece detection device mounted on the above-described transfer robot system, an image processing device as disclosed in Japanese Unexamined Patent Publication (Kokai) No. 2000-293695 (JP-A-2000-293695) can be advantageously applied.

As described above, in the conventional transfer robot system, a container is taken out from the first position and temporarily placed at the fixed temporary container-depository then, in this state, the position and orientation of a workpiece in the container is detected and, thereafter, the detected workpiece is picked out from the container and is fed to the second position. Therefore, a cycle time of a workpiece transfer process is estimated by simply adding up respective times required for the above individual operations. Particularly, in the case where either one of the first and second positions is set outside of the working space of the manipulator, it is required to use an appropriate locomotion unit in order to move the manipulator between the first and second positions. In this case, after the manipulator picks out the workpiece from the container, the locomotion unit is used to move the manipulator, so that the time required for the moving is inevitably included in the cycle time.

### SUMMARY OF THE INVENTION

It is an object of the present invention to provide a transfer robot system including a manipulator, which is capable of effectively reducing a cycle time of a workpiece transfer process and thereby improving a productivity of a product made from the workpiece, even if it is required to move the manipulator for the transfer of the workpiece from the first position to the second position.

To accomplish the above object, the present invention provides a transfer robot system comprising a track extending between a first position at which a container containing a workpiece is placed and a second position to which the workpiece in the container is fed; a manipulator movable along the track, the manipulator capable of holding the container and the workpiece; a temporary container-depository movable along the track synchronously with the manipulator, the container taken out from the first position by the manipulator being temporarily put on the temporary container-depository; a workpiece detecting section for detecting position and orientation of the workpiece contained in the container put on the temporary container-depository, during a period when the manipulator and the temporary container-depository move along the track synchronously with each other; and a transfer control section for controlling the manipulator, based on a detection result in the workpiece detecting section, to make the manipulator pick out the workpiece from the container put on the temporary container-depository and feed the workplace picked from the container to the second position.

In the above transfer robot system, the transfer control section may control the manipulator, based on the detection result in the workpiece detecting section, to make the manipulator pick out the workpiece from the container put on the temporary container-depository, during the period when the manipulator and the temporary container-depository move along the track synchronously with each other.

Also, the workpiece detecting section may distinguish and select a designated workpiece from among several types of workpieces contained in the container put on the temporary container-depository and detect position and orientation of the designated workpiece in the container, during the period when the manipulator and the temporary container-depository move along the track synchronously with each other; and the transfer control section may control the manipulator, based on the detection result in the workpiece detecting section, to make the manipulator pick out the designated workpiece from the container.

The transfer robot system may further comprise a moving platform movable along the track. In this arrangement, the manipulator may be mounted on the moving platform, the temporary container-depository may include a support mounted on the moving platform, and the transfer control section may further control a motion of the moving platform along the track.

A container station may be provided at the first position for collecting and storing a plurality of containers. In this arrangement, the transfer control section may control the manipulator to make the manipulator select a designated container from among the plurality of containers and take out the designated container from the container station.

The workpiece detecting section may comprise a two-dimensional or three-dimensional visual sensor.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a block diagram conceptually showing the basic configuration of a transfer robot system according to the present invention;
Fig. 2 is a block diagram showing the configuration of an example of a workpiece detecting section in the transfer robot system of Fig. 1;
Fig. 3 is a block diagram conceptually showing the configuration of a transfer robot system according to an embodiment of the present invention;
Fig. 4 is a perspective view schematically showing the entire configuration of the transfer robot system of Fig. 3;
Fig. 5 is a partially enlarged perspective view showing one step of a workpiece transfer process using the transfer robot system of Fig. 4;
Fig. 6 is a partially enlarged perspective view showing another step of the workpiece transfer process using the transfer robot system of Fig. 4;
Fig. 7 is a partially enlarged perspective view showing a further step of the workpiece transfer process using the transfer robot system of Fig. 4; and
Fig. 8 is a partially enlarged perspective view showing a yet further step of the workpiece transfer process using the transfer robot system of Fig. 4.

### DETAILED DESCRIPTION

The embodiments of the present invention are described below in detail, with reference to the accompanying drawings. In the drawings, the same or similar components are denoted by common reference numerals.

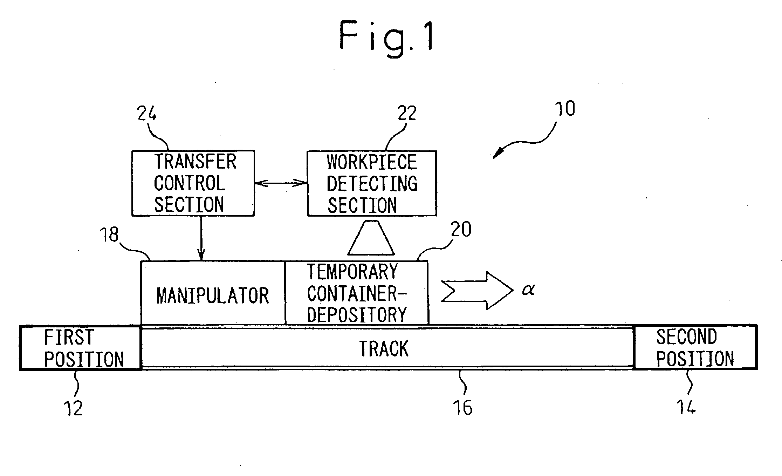

Referring to the drawings, Fig. 1 shows in a block diagram the basic configuration of a transfer robot system according to the present invention. The transfer robot system 10 according to the present invention has a configuration wherein a container (not shown) placed at a first position 12 is taken out from the first position 12, and a workpiece (not shown) contained in the taken-out container is fed to a second position 14. The transfer robot system 10 includes a track 16 extending between the first position 12 and the second position 14; a manipulator 18 movable along the track 16 and capable of holding the container and the workpiece; a temporary container-depository 20 movable along the track 16 synchronously with the manipulator 18, on which the container taken out from the first position 12 by the manipulator 18 is temporarily put; a workpiece detecting section 22 for detecting the position and orientation of the workpiece contained in the container put on the temporary container-depository 20, during a period when the manipulator 18 and the temporary container-depository 20 move along the track 16 synchronously with each other; and a transfer control section 24 for controlling the manipulator 18, based on the detection result in the workpiece detecting section 22, to make the manipulator pick out the workpiece from the container put on the temporary container-depository 20 and feed the workpiece picked from the container to the second position 14. In this connection, the phrase "synchronously with each other" means that the manipulator 18 and the temporary container-depository 20 move along the track 16 at the same timing, at the same speed and in the same direction.

In the transfer robot system 10 having the above configuration, it is possible, in a state where the container taken out by the manipulator 18 from the first position 12 is temporarily put on the temporary container-depository 20 movable synchronously with the manipulator 18, to move the manipulator 18 and the temporary container-depository 20 synchronously with each other along the track 16 from the first position 12 to the second position 14 (in a direction shown by an arrow α) and, during this synchronized movement, to detect the position and orientation of the workpiece by the workpiece detecting section 22. Therefore, as compared to the conventional configuration in which a manipulator is moved from a first position to a second position after a workpiece is detected at a fixed temporary container-depository, it is possible to effectively reduce the cycle time of a workpiece transfer process because the workpiece detection step and the movement step of the manipulator 18 are carried out simultaneously (or in a superimposed manner). As a result, according to the transfer robot system 10, it is possible to improve the productivity of a product made from the workpiece.

In the above configuration, the transfer control section 24 may control the manipulator 18, based on the detection result in the workpiece detecting section 22, to make the manipulator 18 pick out the workpiece from the container put on the temporary container-depository 20, during the period when the manipulator 18 and the temporary container-depository 20 move along the track 16 synchronously with each other. According to this configuration, in addition to the workpiece detection step, the workpiece pick-out step is carried out during the movement of the manipulator 18, so that it is possible to more effectively reduce the cycle time of the workpiece transfer process.

Also, in the above configuration, the workpiece detecting section 22 may distinguish and select a designated workpiece from among several types of workpieces contained in the container put on the temporary container-depository 20 and may detect the position and orientation of the designated workpiece in the container, during the period when the manipulator 18 and the temporary container-depository 20 move along the track 16 synchronously with each other. In this arrangement, the transfer control section 24 controls the manipulator 18, based on the detection result in the workpiece detecting section 22, to make the manipulator 18 pick out the designated workpiece from the container. According to this configuration, even if the several types of workpieces are mixedly contained in one container, it is possible for the manipulator 18 to smoothly pick out the designated workpiece and feed it to the second position 14.

In the transfer robot system 10 as described above, the manipulator 18 is known as a handling robot, and may have various joint mechanisms such as a rectangular coordinate type, a cylindrical coordinate type, a polar coordinate type, and an articulated type. Various hands, adapted to the shape of the container or workpiece to be held, can be attached to the manipulator 18. For example, the manipulator 18 may be constructed such that a hand for holding a container is suitably exchanged with a hand for holding a workpiece by using a known ATC (automatic tool changer) or the like. Further, the manipulator 18 may be mounted on an appropriate locomotion unit movable along the track 16, or the manipulator 18 may be combined with a mobile mechanism to constitute a so-called mobile robot.

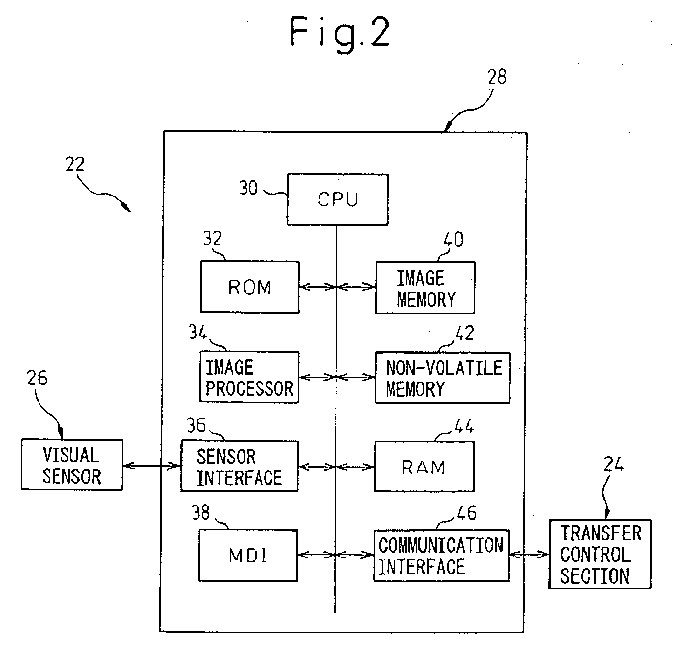

The temporary container-depository 20 may be constructed of a structure (or a support) disposed fixedly relative to the base portion of the manipulator 18, or may be set at a suitable spatial position by using another manipulator as described in, e.g., JP-A-2004-196548. The transfer control section 24 may be constructed of a CPU (central processing unit) of a controller for controlling the operation of the manipulator 18. The workpiece detecting section 22 may be constructed to include an image processing unit as described in, e.g., JP-A-2000-293695. The configuration of this workpiece detecting section 22 will be briefly described below with reference to Fig. 2.

The workpiece detecting section 22 includes a visual sensor 26 for inputting the profile of the workpiece as image data and an image processing device 28 for processing the image data input from the visual sensor to distinguish the workpiece and detect the position and orientation thereof. A known imaging device such as a CCD camera may be adopted as the visual sensor 26. The visual sensor 26 may also be constructed as a three-dimensional visual sensor capable of inputting distance data obtained by spot irradiation with a laser beam, in addition to two-dimensional image data obtained by the imaging device.

The image processing device 28 includes a CPU 30, a ROM 32 for storing a system program and the like to be executed by the CPU 30, an image processor 34 for carrying out an image processing, a sensor interface 36 connected to the visual sensor 26, a MDI 38 with a display function used by an operator to refer to the input and/or output of various commands or data, an image memory 40 for storing image data input from the visual sensor 26, a non-volatile memory 42 for storing a shape model (also referred to as a taught model) of a workpiece, a RAM 44 used for the temporary storage of data or the like, and a communication interface 46 connected to the transfer control section 24. CPU 30 performs a pattern matching process on the image data of a workpiece, input from the visual sensor 26, by using the shape model of the workpiece stored in the non-volatile memory 42, and detects the position and orientation of the workpiece.

In the case where the visual sensor 26 is constructed as a two-dimensional visual sensor, samples of various two-dimensional images corresponding to various inclination angles of the workpiece may be previously stored in the non-volatile memory 42, and may be compared with the two-dimensional image data input from the visual sensor 26, so as to detect the position, distance, inclination, etc. of the workpiece. In the case where the visual sensor 26 is constructed as a three-dimensional visual sensor, distance data obtained by spot irradiation with a laser beam may be used, in addition to the two-dimensional image data input from the visual sensor 26, so as to detect the position, distance, inclination, etc. of the workpiece.

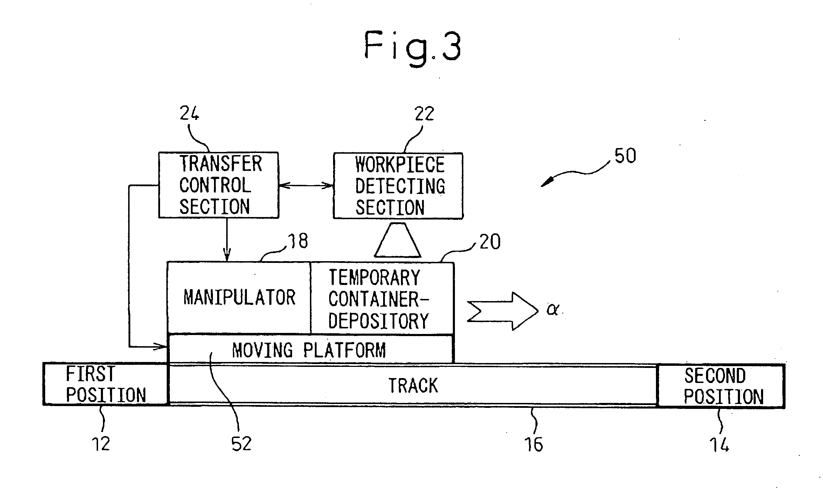

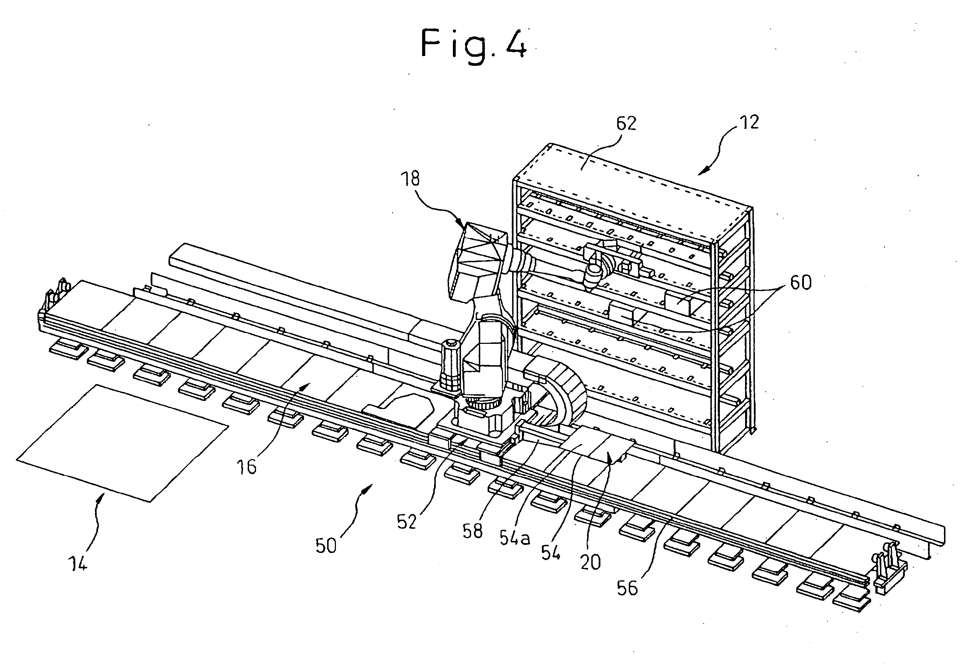

Figs. 3 and 4 show a transfer robot system 50 according to an embodiment of the present invention. The transfer robot system 50 includes, in addition to the basic configuration as shown in Fig. 1, a moving platform 52 movable along the track 16. The manipulator 18 is fixedly mounted at its base portion to the moving platform 52. The temporary container-depository 20 includes a support 54 fixedly mounted to the same moving platform 52. In this arrangement, the transfer control section 24 is constructed so as to further control the motion of the moving platform 52 along the track 16.

The moving platform 52 constitutes, in cooperation with the track 16, a locomotion unit for moving the manipulator 18 between the first position 12 and the second position 14. More specifically, the track 16 includes a pair of linear guide units 56 (only one linear guide unit 56 is shown) extending parallel to each other, and a moving part of each linear guide unit 56 is fixed to the moving platform 52. An electric motor (not shown) is provided as a driving source on the moving platform 52 and, for example, on the back side thereof opposite to a manipulator mount side. A pinion (not shown) is attached to the output shaft of the electric motor, and is engaged with a rack (not shown) laid along the track 16 to transmit the output torque of the electric motor to the rack, so that the moving platform 52 moves on the track 16 in a desired direction. Thus, the transfer control section 24 can move the moving platform 52 with the manipulator 18 and the temporary container-depository 20 (or the support 54) mounted thereon, by controlling the operation of the electric motor, along the track 16 in a desired direction and at a desired speed.

The support 54 is securely provided at the end of a fixed beam 58 projecting from the moving platform 52 along the extending direction of the track 16. The support 54 is a flat plate-like member having sufficient rigidity, and the generally flat upper surface 54a thereof functions as a supporting surface 54a on which the container 60 is temporarily put.

In the illustrated embodiment, a container station 62 is provided, at the first position 12, for collecting and storing a plurality of containers. The container station 62 is constructed as a multiple rack having a plurality of shelves, and the box-shaped containers 60 with no lid are stored in several storage areas provided in the shelves in an individually extractable manner. In this arrangement, the transfer control section 24 may control the manipulator 18 so as to select a designated container 60 from among the plurality of containers 60 stored in the container station 62, and to take out the designated container from the container station 62.

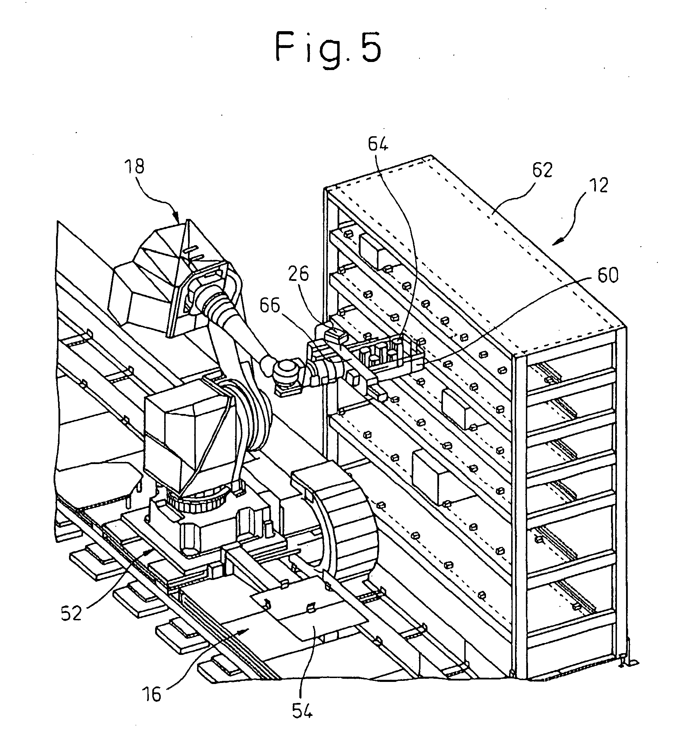

In the illustrated embodiment, as shown in an enlarged manner in Fig. 5, a hand 66 capable of holding the container 60 and the workpiece 64 in the container 60 is attached to the wrist of the manipulator 18. Further, in the wrist region of the manipulator 18, the visual sensor (or the imaging device) 26, as already described, is provided adjacent to the hand 66, as one component of the workpiece detecting section 22.

An example of a workpiece transfer process, using the transfer robot system 50 having above-described configuration, will be described below with reference to Figs. 5 to 8.

A precondition for the workpiece transfer process is as follows. A plurality of containers 60 respectively containing different types of workpieces 64 are stored in the predetermined storage areas in the container station 62. In each container 60, several workpieces 64 of the same type are contained in an appropriate arrangement. In the non-volatile memory 42 (Fig. 2) of the image processing device 28 constituting the workpiece detecting section 22, the image data (or the shape models) of the workpieces 64 in all the containers 60 accommodated in the container station 62 are stored. The workpiece detecting section 22 selects the image data (or the shape model) of the workpiece 64 so as to correspond to the attribute (e.g., the type of the contained workpiece) of the container 60 taken out from the container station 62, and detects the position and orientation of the workpiece 64 in the taken-out container 60 by the pattern matching process as already described.

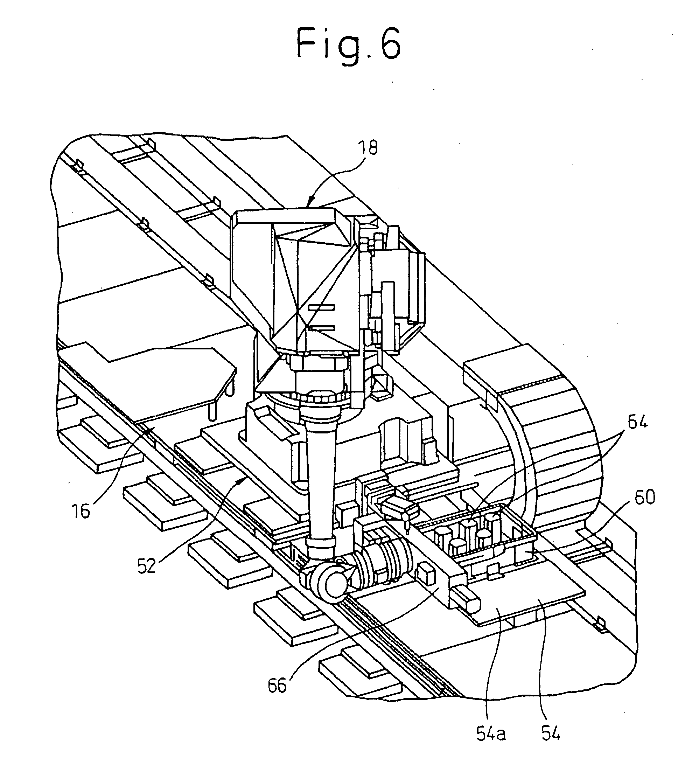

In the workpiece transfer process, first, in accordance with the command from the transfer control section 24 (or the controller of the manipulator 18), the moving platform 52 positions the manipulator 18 and the support 54 at the first position 12 (more precisely, the position adjacent to the first position 12). In the first position 12, the manipulator 18 operates in accordance with the command from the transfer control section 24, and uses the hand 66 so as to take out the designated container 60 from the container station 62 (Fig. 5), and places (or temporarily puts) the taken-out container 60 onto the supporting surface 54a of the support 54 mounted on the moving platform 52 (Fig. 6).

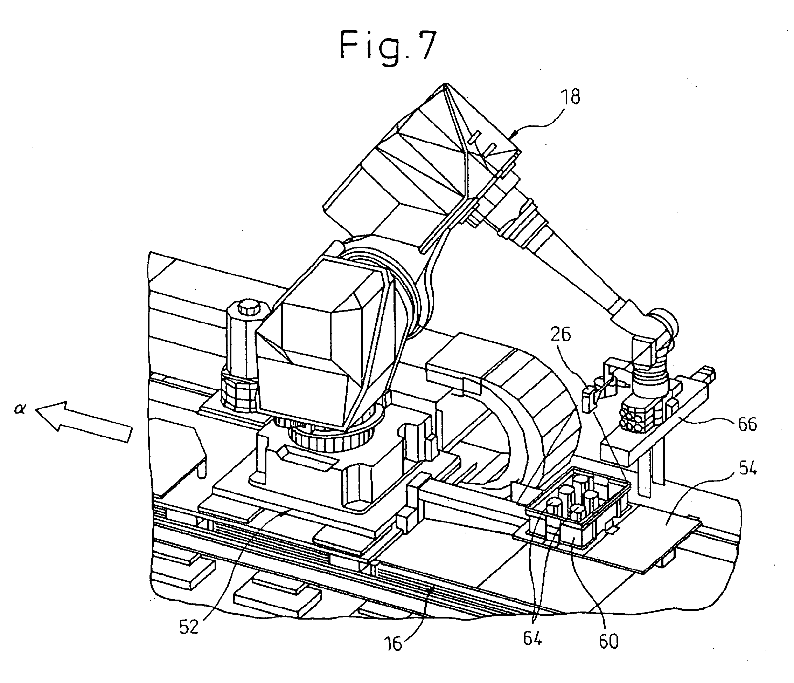

Next, in accordance with the command from the transfer control section 24, the moving platform 52 moves the manipulator 18 and the support 54 at a predetermined speed from the first position 12 to the second position 14 (as shown by an arrow α in Fig. 7). During the period when the manipulator 18 and the support 54 are moved along the track 16 synchronously with each other, the manipulator 18 moves the visual sensor 26, in accordance with the command from the transfer control section 24, toward a suitable position for obtaining the images of the workpieces 64 contained in the container 60 placed on the support 54. Further, in accordance with the command from the transfer control section 24, the CPU 30 of the image processing device 28 constituting the workpiece detecting section 22 issues an imaging command through the sensor interface 36 to the visual sensor 26, and makes the visual sensor 26 obtain images of the workpieces 64 in the container 6G. Then, as already described, the CPU 30 detects the positions and orientations of the workpieces 64, by using the image data of these workpieces 64 (Fig. 7).

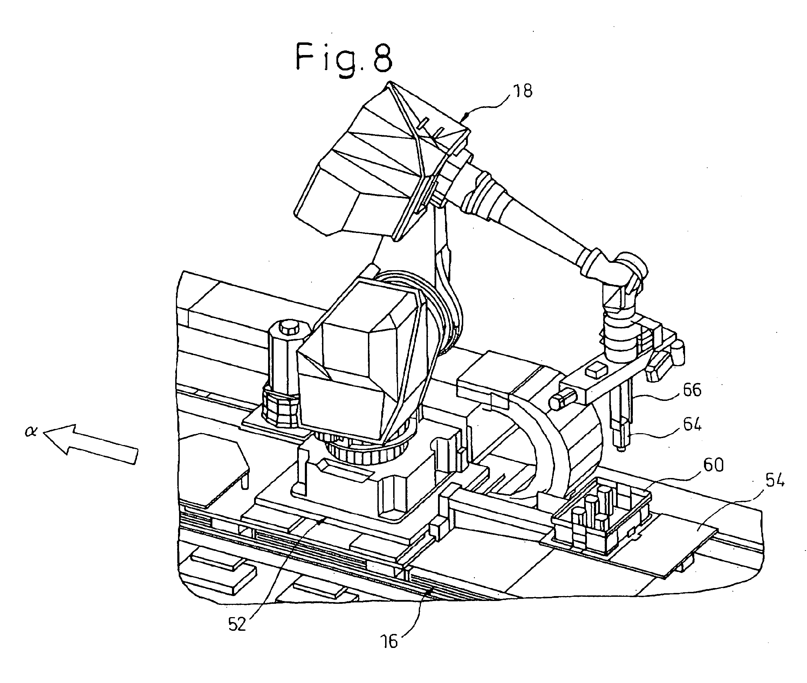

Subsequently, during the period when the manipulator 18 and the support 54 move along the track 16 synchronously with each other, the manipulator 18 operates in accordance with the command from the transfer control section 24 and, based on the detection result of the positions and orientations of the workpieces 64 by the workpiece detecting section 22, uses the hand 66 to pick out a desired one of workpieces 64 (e.g., a workpiece 64 having the easiest position and orientation for picking) from the container 60 (Fig. 8). The manipulator 18 stands by for the next step, with the workpiece kept in the picked-out state, until the manipulator 18 arrives at the second position 14 (Fig. 4) (more precisely, the position adjacent to the second position 14) by the movement of the moving platform 52. After the manipulator 18 and the support 54 arrives at the second position 14, the manipulator 18 operates in accordance with the command from the transfer control section 24 to feed the picked-out workpiece 64 to the second position 14 (e.g., the working station of the next process). Then, for example, the manipulator 18 and the support 54 return to the first position 12 by the movement of the moving platform 52, and the manipulator 18 operates to bring the container 60 on the support 54 into the container station 62, which completes one cycle of the workpiece transfer process.

Thus, in the workpiece transfer process as described above, one cycle is completed by picking out one workpiece 64 from one container 60 and feeding the workpiece to the second position 14. As already described, the resultant cycle time is effectively reduced by the characteristic configuration of the present invention such that the movement of the manipulator 18 and the detection and picking of the workpiece 64 are carried out simultaneously. In particular, the transfer robot system 50 has the advantage that the manipulator 18 and the temporary container-depository 20 (or the support 54) can be easily and reliably moved synchronously with each other along the track 16 by using the common moving platform 52. Also, because the designated container 60 is selected and taken out from among a plurality of containers 60 stored in the container station 62, it is possible to effectively carry out the workpiece transfer process on the various workpieces 64 contained in the containers 60. Further, because a two-dimensional or a three-dimensional visual sensor 26 is used in the workpiece detecting section 22, it is possible to rapidly and accurately detect the position and orientation of the workpiece 64.

In the workpiece transfer process as described above, in the case where two or more workpieces 64 are to be picked out from one container 60, the visual sensor 26 may input again the image data of the workpieces 64 in the container 60, with one workpiece 64 kept in a picked-out state by the manipulator 18 during the movement of the latter along the track 16 (Fig. 8), so as to detect the position and orientation of the next workpiece 64 to be subsequently picked out. In this connection, the reinput step of the image data should be performed as an indispensable step, because the positions and orientations of the workpieces 64 in the container 60 may be changed by the picking of each workpiece 64. In this manner, it is also possible to effectively reduce the cycle time in the case where the several workpieces 64 are to be picked out from one container 60. Further, by using a hand capable of simultaneously holding several workpieces, it is possible to pick out the several workpieces 64 from one container 60 due to the operative effect of the present invention. It should be noted that, even in the case where the track 16 is relatively short and thus the manipulator 18 arrives at the second position 14 before the workpiece 64 is picked out from the container 60 on the support 54, the configuration of the present invention, in which the detection of the workpiece 64 is performed during the movement of the manipulator 18, provides adequate contribution to the reduction of the cycle time of the workpiece transfer process.

While the invention has been described with reference to specific preferred embodiments, it will be understood, by those skilled in the art, that various changes and modifications may be made thereto without departing from the spirit and scope of the following claims.

## Claims

1. A transfer robot system comprising:
a track (16) extending between a first position (12) at which a container (60) containing a workpiece (64) is placed and a second position (14) to which the workpiece in the container is fed;
a manipulator (12) movable along said track, said manipulator capable of holding said container and said workpiece;
a temporary container-depository (20) movable along said track synchronously with said manipulator, said container taken out from said first position by said manipulator being temporarily put on said temporary container-depository;
a workpiece detecting section (22) for detecting position and orientation of said workpiece, contained in said container put on said temporary container-depository, during a period when said manipulator and said temporary container-depository move along said track synchronously with each other; and
a transfer control section (24) for controlling said manipulator, based on a detection result in said workpiece detecting section, to make said manipulator pick out said workpiece from said container put on said temporary container-depository and feed said workpiece picked from said container to said second position.

2. A transfer robot system as set forth in claim 1, wherein said transfer control section controls said manipulator, based on the detection result in said workpiece detecting section, to make said manipulator pick out said workpiece from said container put on said temporary container-depository, during the period when said manipulator and said temporary container-depository move along said track synchronously with each other.

3. A transfer robot system as set forth in claim 1, wherein said workpiece detecting section distinguishes and selects a designated workpiece, from among several types of workpieces contained in said container put on said temporary container-depository, and detects position and orientation of said designated workpiece in said container, during the period when said manipulator and said temporary container-depository move along said track synchronously with each other; and wherein said transfer control section controls said manipulator, based on the detection result in said workpiece detecting section, to make said manipulator pick out said designated workpiece from said container.

4. A transfer robot system as set forth in claim 1, further comprising a moving platform (52) movable along said track, said manipulator being mounted on said moving platform and said temporary container-depository including a support (54) mounted on said moving platform; wherein said transfer control section further controls a motion of said moving platform along said track.

5. A transfer robot system as set forth in claim 1, wherein a container station (62) is provided at said first position for collecting and storing a plurality of containers; and wherein said transfer control section controls said manipulator to make said manipulator select a designated container from among said plurality of containers and take out said designated container from said container station.

6. A transfer robot system as set forth in any one of claims 1 to 5, wherein said workpiece detecting section comprises a two-dimensional or a three-dimensional visual sensor (26).
